# EUROPEAN PATENT APPLICATION

(11) **EP 2 944 201 A1**
(43) Date of publication of application: **18.11.2015**
(21) Application number: 14738164.4
(22) Date of filing: 14.01.2014
(51) Int. Cl.: A23G 9/34, A23G 9/32

(54) **COMPOSITION FOR LOW FAT ICE CREAM, CONTAINING TAGATOSE, LOW-FAT ICE CREAM USING SAME, AND PREPARATION METHOD THEREFOR**

(30) Priority: 14.01.2013 KR 20130003984
(71) Applicant: Cj Cheiljedang Corporation, Seoul 100-400 (KR)
(72) Inventor: KIM, Beom Suk, Seoul 135-986 (KR); KOH, Ji Hoon, Seoul 121-799 (KR); PARK, Seung Won, Yongin-si Gyeonggi-do 446-727 (KR)
(74) Representative: Nevant, Marc
(86) International application number: PCT/KR2014/000383
(87) International publication number: WO 2014/109620

(57) **Abstract**

Disclosed herein is a method for preparing low-fat ice cream which has low fat content and low calories while exhibiting excellent taste. The composition includes 0.1 part by weight to 10 parts by weight of D-tagatose based on the total composition. A method for preparing low-fat ice cream using the composition, and a D-tagatose containing low-fat ice cream prepared by the method are also disclosed. The low-fat ice cream has low fat content and low calories, and exhibits excellent softness

## Description

### Technical Field

The present invention relates to a composition for low-fat ice cream containing D-tagatose and low-fat ice cream prepared using the same. In addition, the present invention relates to a method for preparing low-fat ice cream using D-tagatose.

### Background Art

Ice cream is a food prepared by mixing milk or other dairy products with sweeteners, flavor components and the like, followed by freezing, and is a dessert widely loved all around the world.

Since a high fat content or high-calorie ingredient, such as milk, sugar and the like, is used as a main material in the preparation of ice cream, even small servings of ice cream contain considerable calories and fat. In addition, since young consumers may ingest excess ice cream due to appetizing soft and sweet tastes, ice cream may cause juvenile obesity, juvenile diabetes, and the like. Further, there is a problem in that ice cream may cause adult diseases including hyperlipidemia, obesity, diabetes, and the like.

To resolve such problems, various attempts have been made to develop low-fat ice cream, and some examples of low-fat ice cream are disclosed in Korean Patent No. 10-0926638, Korean Patent Publication No. 10-2011-0018989, and the like.

To reduce fat content and calories of ice cream, these documents disclose methods for preparing ice cream by increasing the content of rice, chestnuts, fruits or other materials instead of decreasing the content of dairy products, such as milk and the like. However, although fat content and calories of ice cream can be reduced by these method, ice cream produced by these methods are closer to a sherbet or the like rather ice cream which exhibits softness of frozen dairy products, and thus cannot be referred to as ice cream having low fat and low calories.

Thus, there is a need for ice cream which has low fat content and low calories while maintaining softness of original ice cream.

### Technical Problem

The present invention is aimed at providing low-fat ice cream which contains low fat content and exhibits excellent softness.

Specifically, the present invention is aimed at providing a D-tagatose containing low-fat ice cream, which has low fat content and low calories and exhibits excellent softness, using a composition for low-fat ice cream containing 0.1 part by weight to 10 parts by weight D-tagatose based on the total composition, and a method for preparing low-fat ice cream using the composition.

### Technical Solution

The present invention provides a composition for low-fat ice cream containing D-tagatose in order to reduce the fat content and calories of ice cream while improving the softness thereof. In addition, the present invention provides a method for preparing low-fat ice cream using the composition for low-fat ice cream containing D-tagatose, and low-fat ice cream containing D-tagatose.

It is one aspect of the present invention to provide a method for preparing low-fat ice cream containing D-tagatose, which includes: dissolving and sterilizing 35 parts by weight to 75 parts by weight of milk, 1 part by weight to 25 parts by weight of sugar, 0.1 part by weight to 10 parts by weight of D-tagatose, and 0.01 part by weight to 5 parts by weight of an emulsifier; homogenizing the dissolved and sterilized composition; and cooling and freezing the homogenized composition.

It is another aspect of the present invention to provide low-fat ice cream containing D-tagatose prepared by the method.

It is a further aspect of the present invention to provide a composition for low-fat ice cream containing D-tagatose including 35 parts by weight to 75 parts by weight of milk, 1 part by weight to 25 parts by weight of sugar, 0.1 part by weight to 10 parts by weight of D-tagatose, and 0.01 part by weight to 5 parts by weight of an emulsifier.

It is yet another aspect of the present invention to provide low-fat ice cream containing D-tagatose prepared using the composition.

### Advantageous Effects

The present invention provides a method for preparing low-fat ice cream using D-tagatose and a composition for low-fat ice cream containing D-tagatose, and thus reduces fat content and calories of ice cream while improving the softness thereof.

Specifically, the present invention uses D-tagatose capable of lowering freezing point in the preparation of ice cream, and thus provides low-fat ice cream having improved softness unique to ice cream while containing a small amount of dairy products or milk fat.

### Description of Drawings

Fig. 1 is a graph depicting measurement results of melting rate of ice cream according to Experimental Example 1.
Fig. 2 is a graph depicting the results of sensory evaluation of ice cream according to Experimental Example 3.

### Best Mode

Hereinafter, embodiments of the present invention will be described in detail with reference to the accompanying drawings. Description of details apparent to those skilled in the art will be omitted for clarity.

In accordance with one aspect of the present invention, there is provided a composition for low-fat ice cream containing D-tagatose to reduce fat content and calories of ice cream while improving the softness thereof. Specifically, the composition for low-fat ice cream may include 35 parts by weight to 75 parts by weight of milk, 1 part by weight to 25 parts by weight of sugar, 0.1 part by weight to 10 parts by weight of D-tagatose, and 0.01 part by weight to 5 parts by weight of an emulsifier.

D-tagatose, a naturally produced low-calorie sugar, is an isomer of fructose. Although D-tagatose exhibits sweetness similar to that of sugar, that is, about 92% the sweetness of sugar, D-tagatose only has about 38% the calories of sugar and about 4% the glycemic index (GI) of sugar, and thus has been spotlighted as a sweetener replacement for sugar.

In addition, D-tagatose is known as Generally Recognized As Safe (GRAS) by the Food and Drug Administration (FDA) and thus is a material approved to be used in food, beverages, health food, diet additives and the like as a sweetener. Further, since D-tagatose is known to have no side effects when absorbed in human bodies, it is expected that D-tagatose will be widely utilized in the art.

Further, D-tagatose has a considerably lower freezing point than other sweeteners, such as sugar and the like, and thus serves to reduce the freezing point of a composition containing D-tagatose.

In accordance with another aspect of the present invention, there is provided low-fat ice cream which has improved softness while reducing fat content and calories using D-tagatose, thereby exhibiting excellent taste, as described below.

According to the invention, the milk may be any milk typically used in the art without limitation.

According to the invention, the sugar may be any sugar typically used in the art without limitation. Preferably, the sugar is white sugar.

According to the invention, the emulsifier may be any emulsifier typically used in the art without limitation. Examples of the emulsifier may include glycerol ester, propylene glycol ester, sucrose ester, sorbitan ester, monoglyceride, diglyceride, triglyceride, glycerin fatty acid ester, sucrose fatty acid ester, sorbitan fatty acid ester, propylene glycol fatty acid ester, polyoxyethylene sorbitan fatty acid ester, and lecithin, without being limited thereto. These may be used alone or in combination thereof.

In one embodiment of the invention, the milk is present in an amount of 35 parts by weight to 75 parts by weight, preferably 40 parts by weight to 60 parts by weight, based on 100 parts by weight of the composition for ice cream.

The sugar is present in an amount of 1 part by weight to 25 parts by weight, preferably 1 part by weight to 20 parts by weight, more preferably 5 parts by weight to 15 parts by weight.

D-tagatose is present in an amount of 0.1 part by weight to 10 parts by weight, preferably 0.1 part by weight to 5 parts by weight, more preferably 0.5 part by weight to 3 parts by weight. Within this range, since D-tagatose can sufficiently reduce the freezing point of the composition, low-fat ice cream exhibiting sufficient softness despite low fat content thereof can be prepared.

The emulsifier is present in an amount of 0.01 part by weight to 5 parts by weight, preferably 0.01 part by weight to 3 parts by weight, more preferably 0.05 part by weight to 1 part by weight.

In another embodiment of the invention, the composition may further include milk fat, which may be added during the operation of dissolving and sterilizing the components.

The milk fat may be any milk fat typically used in the art without limitation. The milk fat is present in an amount of 10 parts by weight to 30 parts by weight, preferably 15 parts by weight to 25 parts by weight, more preferably 15 parts by weight to 20 parts by weight, based on 100 parts by weight of the composition for low-fat ice cream.

Within this range of the milk fat, low-fat ice cream exhibiting low calories and softness can be prepared through reduction in the content of the milk fat.

In a further embodiment of the invention, the composition may further include powdered skim milk, which may be added during the operation of dissolving and sterilizing the components.

The powdered skim milk may be any powdered skim milk typically used in the art without limitation. The powdered skim milk is milk solids-not-fat, and complements solids required to be used in a sufficient amount to prevent deterioration in flavor and taste of the ice cream according to the invention, which contains a reduced amount of milk fat while containing D-tagatose, and thus improves the taste of the low-fat ice cream.

The powdered skim milk is present in an amount of 1 part by weight to 15 parts by weight, preferably 1 part by weight to 10 parts by weight, more preferably 3 parts by weight to 8 parts by weight, based on 100 parts by weight of the composition for low-fat ice cream. Within this range, the powdered skim milk can prevent the deterioration in taste of the ice cream due to a reduction in milk fat content, whereby the low-fat ice cream can exhibit sufficiently excellent softness.

In yet another embodiment of the invention, the composition may further include starch syrup, which can be added during the operation of dissolving and sterilizing the components.

The starch syrup may be any starch syrup typically used in the art without limitation. The starch syrup provides a function similar to powdered skim milk. Specifically, the starch syrup is used together with D-tagatose and/or powdered skim milk in the low-fat ice cream, which can be deteriorated in flavor and taste due to a reduction in milk fat, and thus serves to improve the softness and flavor of the low-fat ice cream.

The starch syrup is present in an amount of 1 part by weight to 20 parts by weight, preferably 1 part by weight to 15 parts by weight, more preferably 5 parts by weight to 15 parts by weight, based on 100 parts by weight of the composition for low-fat ice cream. Within this range, the starch syrup can prevent deterioration in taste of the ice cream due to reduction in milk fat content, whereby the low-fat ice cream can exhibit sufficiently excellent softness.

In accordance with another aspect of the present invention, there is provided low-fat ice cream prepared from the composition for low-fat ice cream in accordance with the present invention.

According to the invention, the low-fat ice cream includes 13% by weight (wt%) or less, preferably 10 wt% or less of milk fat, based on the total weight thereof.

As used herein, the term "a certain value or less" does not include any negative value less than 0, and includes any positive value exceeding 0 and extremely close to 0.

The low-fat ice cream has a considerably lower freezing point than ice cream which is free from D-tagatose and is prepared using sugar.

In accordance with a further aspect of the present invention, the low-fat ice cream has a melting rate of 100% to 80%, preferably 100% to 90% the melting rate of high-milk fat ice cream free from D-tagatose.

As for the melting rate (melting properties), high-quality ice cream should have a melting resistance low enough to almost melt after at least 10 minutes to 15 minutes. In addition, the high-quality ice cream should melt well from the middle thereof and then softly and constantly melt to be in a uniform liquid state. To evaluate such melting properties, the following experiment may be performed: ice creams each placed in an amount of 100 ml in the same container are stored in a freezer at -10°C for 1 hour, followed by simultaneously taking the ice cream out, and then left at 20°C. The melting rate of each ice cream is recorded by measuring the elapsed time until the occurrence of a first drop from each ice cream.

Generally, phenomena and causes observed when ice cream melts are as follows: ice cream may not melt or may have a delay in melting, and may have layers when the ice cream is not uniform. Large air bubbles may be generated when the ice cream melts due to excessive overrun, and lumps may be generated due to the destabilization of proteins. Destabilization of proteins may be caused by inappropriate acidity, formation of salts, wrong selection of stabilizers, or the like. When the balance of salts and the composition ratio are wrong, whey separation may occur. Finally, when exhibiting low melting resistance, ice cream may melt into a water-like state.

According to the invention, although ice cream was expected to exhibit low melting resistance due to reduced milk fat, the ice cream maintained a melting rate similar to that of high-quality ice cream due to the change in the amounts of powdered skim milk and starch syrup. In addition, the ice cream maintains softness by containing D-tagatose.

In quality evaluation of the ice cream according to various examples, ice cream, which had a melting rate maximally similar to that of a comparative product (conventional product), was rated as high-quality ice cream in terms of maintaining a conventional quality level, based on experimental results.

In accordance with yet another aspect of the present invention, there is provided a method for preparing low-fat ice cream using the composition low fat ice cream containing D-tagatose.

Specifically, the method includes: dissolving and sterilizing 35 parts by weight to 75 parts by weight of milk, 1 part by weight to 25 parts by weight of sugar, 0.1 part by weight to 10 parts by weight of D-tagatose, and 0.01 part by weight to 5 parts by weight of an emulsifier; homogenizing the dissolved and sterilized composition; and cooling and freezing the homogenized composition.

Since details of the composition for ice cream containing D-tagatose according to the invention are the same as those of the composition used in the method according to the present invention, descriptions of the composition can be replaced by the above description and thus will be omitted hereinafter.

According to the invention, dissolving and sterilizing the components may be performed by any method typically used in the art without limitation. For example, dissolving and sterilizing may be performed in the following manner, but is not limited thereto. Dissolving and sterilizing the components may be performed by introducing appropriately weighed amounts (preferably, within the aforementioned ranges of amounts) of milk, milk fat, an emulsifier, sugar, D-tagatose, powdered skim milk and starch syrup into a sterilizer at about 70°C, followed by dissolving and sterilizing the components for about 40 minutes.

According to the invention, homogenizing the dissolved and sterilized composition may be performed by any method typically used in the art without limitation. For example, homogenizing the dissolved and sterilized composition may be performed in the following manner, but is not limited thereto. To allow fat in the composition to uniformly and stably disperse, homogenizing the dissolved and sterilized composition may be performed by mixing the composition for ice cream, which is dissolved and sterilized through dissolving and sterilizing the components, for about 20 minutes using a high-speed mixer.

According to the invention, cooling and freezing the homogenized composition may specifically include cooling, aging the composition for ice cream, shaping ice cream, and freezing. Each operation may be performed by any method typically used in the art without limitation. For example, the processes from cooling until freezing may be performed in the following manner. The composition for ice cream, which is obtained through homogenizing of the dissolved and sterilized composition, is cooled to about 10°C or less, followed by setting an overrun to about 25%, thereby preparing ice cream. Next, a container is filled with an appropriate amount of the ice cream. Next, the ice cream is rapidly frozen at -25°C or less for about 2 hours using a rapid freezer. Through these processes, cooling and freezing may be performed. The prepared ice cream may be generally stored in a freezer at about -10°C or less for distribution thereof.

Hereinafter, the present invention will be explained in more detail with reference to some examples. It should be understood that these examples are provided for illustration only and are not to be in any way construed as limiting the present invention.

### Example 1

### Preparation of D-tagatose-containing low-fat ice cream

1 part by weight of D-tagatose, 11 parts by weight of sugar, 18 parts by weight of milk fat, 6.5 parts by weight of powdered skim milk, 52.5 parts by weight of milk, 10.5 parts by weight of starch syrup, and 0.5 part by weight of an emulsifier were dissolved and sterilized in a sterilizer of 70°C for 40 minutes. Next, the composition was homogenized by mixing the composition for 20 minutes using a high-speed mixer.

Next, the homogenized composition was cooled to 10°C, followed by setting an overrun to 25%, thereby preparing ice cream. Then, the ice cream was supplied in an amount of 100 ml to an ice cream container. Next, the ice cream was rapidly frozen at - 25°C for 2 hours using a rapid freezer, thereby preparing a D-tagatose-containing low-fat ice cream.

### Comparative Example 1

### Preparation of sugar-containing ice cream

Ice cream was prepared in the same manner as in Example 1 except that 16 parts by weight of sugar, 27.2 parts by weight of milk fat, 3.6 parts by weight of powdered skim milk, 50.2 parts by weight of milk, 2.5 parts by weight of starch syrup, and 0.5 part by weight of emulsifier were used in dissolution and sterilization.

### Comparative Example 2

### Preparation of ice cream containing glucose

Ice cream was prepared in the same manner as in Example 1 except that 1 part by weight of glucose was used instead of 1 part by weight of D-tagatose in dissolution and sterilization.

Table 1 shows the components and amounts thereof in ice creams prepared in Example 1 and Comparative Examples 1 and 2.

**Table 1**

| Amount of component (wt%) | Example 1 | Comparative Example 1 | Comparative Example 2 |
|---|---|---|---|
| D-tagatose | 1 | - | - |
| Glucose | - | - | 1 |
| Sugar | 11 | 16 | 11 |
| Milk fat | 18 | 27.2 | 18 |
| Powdered skim milk | 6.5 | 3.6 | 6.5 |
| Milk | 52.5 | 50.2 | 52.5 |
| Starch syrup | 10.5 | 2.5 | 10.5 |
| Emulsifier | 0.5 | 0.5 | 0.5 |
| Total | 100 | 100 | 100 |

### Experimental Example 1

### Evaluation of melting rate of ice cream

To evaluate the melting rate of each of the ice creams prepared in Example 1 and Comparative Examples 1 and 2, the following experiment was performed. Ice creams each placed in an amount of 100 ml in the same container were stored in a freezer at -10°C for 1 hour, followed by simultaneously taking the ice cream out, and then left at 20°C. The melting rate of each ice cream was recorded by measuring the time elapsed until the occurrence of a first drop from each ice cream.

The measurement method is as described above, and the ice cream of Example 1 can be evaluated as excellent-quality ice cream when the ice cream has a melting rate of at least 90% or more the melting rate of the ice cream of Comparative Example 1.

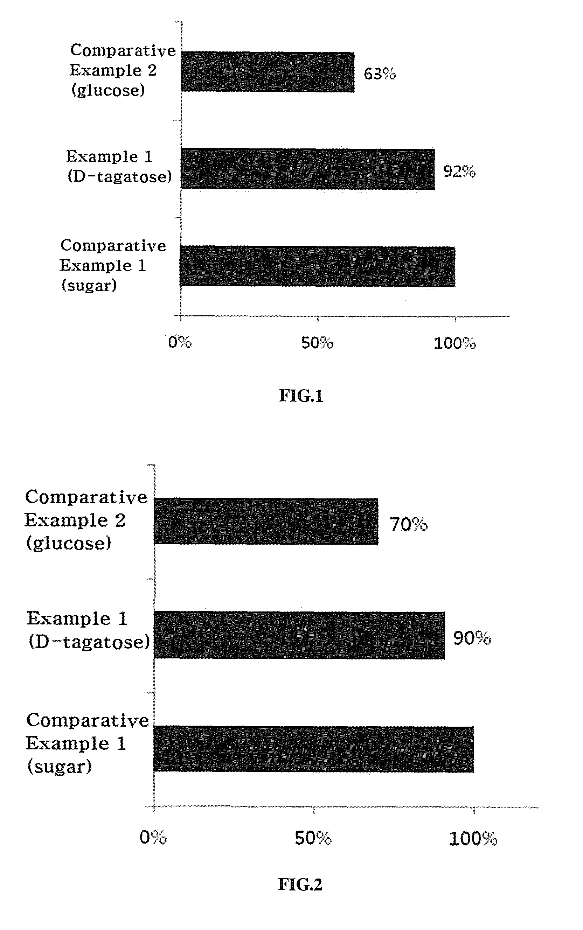

The results are shown in Fig. 1.

### Experimental Example 2

### Component analysis of ice cream and Evaluation of calories thereof

Each of the ice creams prepared in Example 1 and Comparative Examples 1 and 2 was subjected to a component analysis and evaluated as to calories.

The results are shown in Table 2.

**Table 2**

| | | Example 1 | Comparative Example 1 | Comparative Example 2 |
|---|---|---|---|---|
| Amount of component (wt%) | Milk fat | 9.5 | 13.5 | 9.5 |
| | Milk solids-not-fat (MSNF) | 11 | 7.9 | 11 |
| | Milk solids | 20.5 | 21.4 | 20.5 |
| | Sugar | 18.3 | 17.5 | 17.2 |
| Calories (kcal) | Total calories | 197 | 217 | 210 |
| | Calories due to fat | 90 | 117 | 90 |

### Experimental Example 3

### Sensory evaluation of ice cream

A sensory evaluation of each of the ice creams prepared in Example 1 and Comparative Examples 1 and 2 was performed to evaluate the taste and preference thereof.

The results of the sensory evaluation are shown in Fig. 2.

As shown in Fig. 2, when the ice cream of Comparative Example 1 was rated as 100, the D-tagatose containing ice cream of Example 1 scored 90% relative to the ice cream of Comparative Example 1, and the glucose-containing ice cream of Comparative Example 2 scored about 70% relative to the ice cream of Comparative Example 1 in terms of taste and quality.

## Claims

1. A composition for ice cream containing D-tagatose comprising:
35 parts by weight to 75 parts by weight of milk;
1 part by weight to 25 parts by weight of sugar;
0.1 part by weight to 10 parts by weight of D-tagatose; and
0.01 part by weight to 5 parts by weight of an emulsifier.

2. The composition according to claim 1, further comprising: 10 parts by weight to 30 parts by weight of milk fat.

3. The composition according to claim 1, further comprising: 1 part by weight to 15 parts by weight of powdered skim milk.

4. The composition according to claim 1, further comprising: 1 part by weight to 20 parts by weight of starch syrup.

5. Ice cream containing D-tagatose prepared from the composition according to any one of claims 1 to 4.

6. The ice cream containing D-tagatose according to claim 5, wherein milk fat is present in an amount of 13 wt% or less based on the total weight of the ice cream.

7. A method for preparing ice cream containing D-tagatose, comprising:
dissolving and sterilizing a composition, wherein the composition comprises: 35 parts by weight to 75 parts by weight of milk, 1 part by weight to 25 parts by weight of sugar, 0.1 part by weight to 10 parts by weight of D-tagatose, and 0.01 part by weight to 5 parts by weight of an emulsifier;
homogenizing the dissolved and sterilized composition; and
cooling and freezing the homogenized composition.

8. The method according to claim 7, wherein the composition further comprises 10 parts by weight to 30 parts by weight of milk fat.

9. The method according to claim 7, wherein the composition further comprises 1 part by weight to 15 parts by weight of powdered skim milk.

10. The method according to claim 7, wherein the composition further comprises 1 part by weight to 20 parts by weight of starch syrup.
